# EUROPEAN PATENT APPLICATION

(11) **EP 4 266 275 A1**
(43) Date of publication of application: **25.10.2023**
(21) Application number: 21888732.1
(22) Date of filing: 25.10.2021
(51) Int. Cl.: G07D 11/00

(54) **METHOD AND DEVICE FOR THE TRANSPORT OF BANKNOTES AND DOCUMENTS**

(30) Priority: 28.10.2020 ES 202031078
(71) Applicant: Hart Automation, S.L., 28700 San Sebastian de los Reyes (ES)
(72) Inventor: LÓPEZ JIMÉNEZ, Miguel, 28700 San Sebastian de los Reyes (ES)
(86) International application number: PCT/ES2021/070772
(87) International publication number: WO 2022/096765

(57) **Abstract**

Stackable container with a capacity-draining stopper consisting of a container body (5), of the soft drink can type, and a capacity-draining stopper (1) of the container, wherein the container body (5) has two parts, an upper cylindrical part (9) followed in continuity by a narrow zone (7) consisting of a cylindrical zone of smaller diameter, wherein the upper part of the upper zone of the container has an external thread (6); and where the capacity-diminishing stopper (1) consists of a cylindrical surface with a diameter slightly smaller than the diameter of the upper part (9) of the container, open on its upper side, and which has on its upper external part a cylindrical upper flange (10) provided with a lateral anti-slip surface (2) and on its internal part has a thread (4) and an elastic seal (3) so that when the stopper (1) is screwed onto the thread (6) of the container body (5) the assembly remains airtight.

## Description

### OBJECT OF THE INVENTION

The present invention, as expressed in the wording of this description, relates to a process and device for transporting banknotes and documents, consisting of a device which rolls the banknotes or documents, handles them and deposits them in a special container for transporting them by conventional means, duly rolled.

### FIELD OF THE INVENTION

The field of the invention corresponds to the auxiliary industry of banknote and document handling machines and devices.

### BACKGROUND OF THE INVENTION

There are different remote antecedents on banknote storage and transport devices.

Within the cash management industry at the moment several procedures are used, in total the generic family of patents contains more than 12,000 documents. Among them we have highlighted the following that can be considered closer to the recommended invention.

**Patent** US410585**, for "Money management device and its dispensing method", for "Money management device and its dispensing method".**

(Money management device and its dispensing method). In favor of Kazuhiro Doi Glory Ltd.

Priority 2009-03-25 - Filed 2010-03-24 - Granted 2018-05-11 - Published 2018-05-11

In summary it is a money handling apparatus, consisting of: a deposit unit (11) that deposits the money; a transport unit (16) that transports the money; a recognition unit (12) that recognizes the money; a money storage (21) that stores money; a dispensing unit (13) that dispenses money.

Studied in depth the invention, although it consists of similar parts such as a deposit unit, a storage unit, and a dispensing unit; none of the mentioned units work as the ones referred to in the recommended patent.

The transport of the banknotes is carried out flat, a detail of great technical importance in terms of differentiation; the storage is carried out in rectangular containers with the flat banknotes up to the transport module which is reflected as conventional.

For all of the above, this document cannot be considered as an antecedent that could affect the novelty or inventive step of the recommended invention.

**Patent** JP 413088 **for "Bill storage and discharge device and bill transport device".**

"Bill storage and discharge device and bill transport device".

Priority 2002-10-03 - Filed 2002-10-03 - Granted 2008-08-06 - Published 2008-08-06

In brief it comprises a reel that winds / rewinds the bill, a first roller that rotates in contact with the bill that is wound / rewound by the reel, and a bill that is rotated by the first roller in a short lateral direction from the outside of the apparatus. A reel for winding / rewinding banknotes to be transported.

Although it performs similar function, the device for receiving and handling the banknotes is totally different, since it is direct rewinding reels of banknotes by external means and storage in flat containers, so it is not a background that can be considered relevant.

### BRIEF DESCRIPTION OF THE INVENTION

The device which the invention proposes incorporates a plurality of novel features in relation to other elements used within the sector and which solves problems which up to now were complicated to solve and in some cases impossible,

The present invention refers to the device is constituted by a reception container formed by an inverted asymmetrical cone trunk presenting a piece of perimeter in the form of a flat wall through which a banknote will be introduced.

It has an input sensor that detects the arrival of the banknote, which starts the traction device consisting of a continuous conveyor belt held at the upper end by a pulley and at the lower end by another pulley where the shaft of one of the pulleys is linked to a small electric motor and between the two pulleys keeps the conveyor belt taut.

Attached to the outside face of the continuous conveyor belt is a plane with a series of rolling elements.

At the end of the receiving container there is a circular banknote exit crown with adjustable diameter by means of a series of rolling cylinders through which the rolled banknotes exit due to their forced passage through the inverted truncated cone shape of the receiving container.

The banknotes thus rolled are fed directly into the container, which consists of a cylinder slightly higher than the rolled banknote, with upper and lower toroidal edges made of flexible and sliding material and with an external diameter larger than the diameter of the container.

A transport device is located downstream of the container.

### BRIEF DESCRIPTION OF THE DRAWINGS

To complement the description being made and in order to assist in a better understanding of the features of the invention, a sheet of drawings is attached to this description, as an integral part of it, in which the following drawings are included with the present description identical references indicate identical elements and where, for illustrative and non-limiting purposes, the following has been represented:

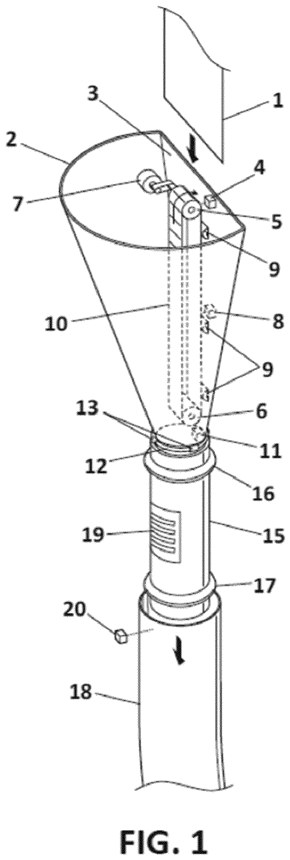

FIGURE N° 1.- Schematic front view of the banknote transport device and its parts.

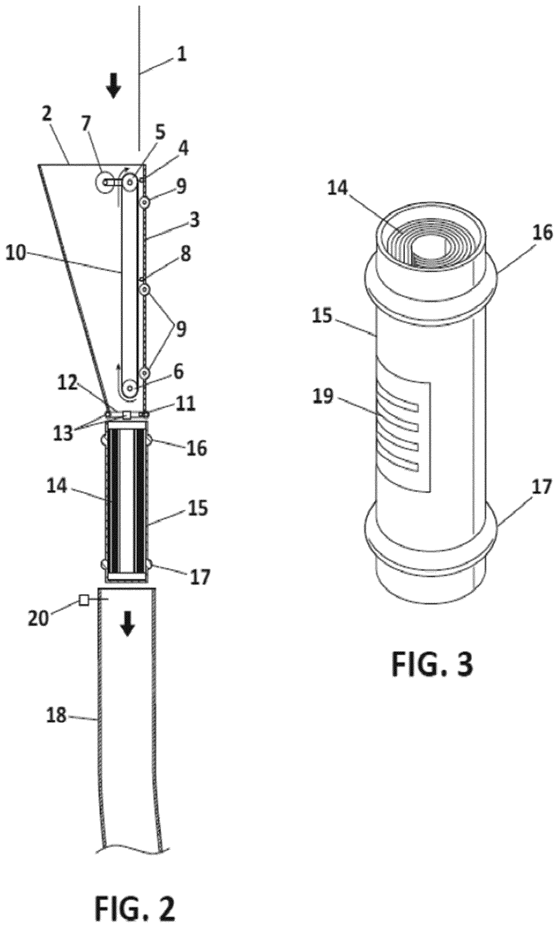

FIGURE N° 2.- Isometric view of the banknote receiver with the banknotes duly rolled up inside.

And in these figures the same elements are identified with identical numbering:
(1).- ticket,
(2).- receiving container,
(3).- flat wall,
(4).- ticket entry sensor,
(5).- upper pulley, driving pulley, (6).
(6).- lower pulley,
(7).- motor,
(8).- pitch sensor,
(9).- rolling cylinders,
(10).- continuous traction belt,
(11).- winding sensor,
(12).- output ring gear,
(13).- rolling elements,
(14).- rolled banknotes,
(15).- container container,
(16).- upper toroidal rim of the receiver container,
(17).- lower toroidal rim of the receiver container, (17).- lower toroidal rim of the receiver container,
(18).- pneumatic transport device, (19).
(19).- code of the receiving vessel,
(20).- passage sensor,

### PREFERRED EMBODIMENT OF THE INVENTION

The device which the invention proposes incorporates a plurality of novel features in relation to other elements used within the sector and which solves problems which up to now were complicated to solve and in some cases impossible,

The present invention refers to a procedure and device for the transport of banknotes and documents, consisting of a device which rolls up the banknotes or documents, handles them and deposits them in a special container for transporting them by conventional means, duly rolled up.

In a preferred embodiment of the invention the device is constituted by a receiving container (2) formed by an inverted truncated cone having a flat wall-shaped perimeter piece (3) through which a banknote (1) will be inserted, which can be inserted vertically with the smaller base downwards or horizontally with the larger base downwards.

Attached to the outer face of the continuous conveyor belt (10) is a plane with a series of rolling elements (9), and in its intermediate part there is a banknote passage sensor (8).

At the end of the receiving container (2) there is a circular exit ring (12) of adjustable diameter by means of a series of rolling cylinders (13) through which the rolled banknotes (14) exit due to their forced passage through the inverted truncated cone shape of the receiving container (2) and where the passage sensor (20) confirms that the banknote (14) has passed into the container (15).

The rolled banknotes (14) are deposited directly into the container (15) consisting of a cylinder slightly higher than the height of the rolled banknote (14) and a control code (19) located on its outer surface, provided with two upper (16) and lower (17) toroidal edges made of flexible and sliding material and with a larger diameter than the diameter of the container (15).

As soon as the input sensor (4) detects the arrival of a banknote (1) it starts the traction device consisting of a continuous traction belt (10), made of soft inelastic material held at the lower end by a lower pulley (6) and at its upper end by an upper traction pulley (5) where the shaft of this traction pulley (5) is linked to a small electric motor (7) and which between both pulleys (5) and (6) keeps the traction belt taut.

Downstream of the container (15) there is a pneumatic transport device consisting of a flexible tube 1 or 2 mm. larger in diameter than the toroidal edges (16) and (17) of the container (15); provided with a suction device.

The banknote and document transport procedure advocated by the invention begins when a banknote (1) is introduced into the receiving container (2) through the flat wall (3) thereof. The input sensor (4) detects the arrival of the banknote (1) and starts the motor (7) which activates the movement of the continuous conveyor belt (10).

The banknote is trapped between the continuous conveyor belt (10) and the rolling elements (9) that force it down against the walls of the receiving container (2), which, due to its truncated cone shape, causes it to roll up on itself. In order to control the passage and speed of the bill, there is a bill passage sensor (8) at mid-height of the receiving container (2).

The thus rolled banknote (14) is pushed to the exit crown (12) where the pressure of the rolling cylinders (13) keeps it perfectly rolled and where the rolling sensor (11) confirms that the banknote (14) passes into the container (15), where according to the banknotes stored there it unrolls towards the walls of the said container leaving a free inner circle for the next banknote until it is physically impossible to insert another banknote into the free inner circle.

The container (15) filled with banknotes or with the marked quantity of banknotes is inserted into the pneumatic transport tube (18) where the container (15) is perfectly fitted by means of the toroidal edges (16) and (17) so that the device, by means of suction, transfers it to the preset destination. The container (15) can also be transported by any other means, including direct manual means.

The code of the receiving container (19) is constituted by an element capable of being automatically read as a bar code, QR code, NFC or similar so that its content can be associated with the transaction carried out by the device that made the delivery.

The nature of the invention having been sufficiently described, as well as the manner of putting it into practice, it should be noted that the provisions previously indicated and represented in the attached drawings are susceptible to modifications of detail insofar as they do not alter their fundamental principles, set forth in the preceding paragraphs and summarized in the following claims.

## Claims

1. ^{a}.- Procedure and device for the transport of banknotes and documents **characterized in that** the device is constituted by a reception container (2) formed by an inverted cone-shaped trunk with a piece of the upper perimeter in the form of a flat wall (3) through which the banknote (1) will be introduced and which has an input sensor (4) that when it detects the arrival of a banknote (1) starts the traction device constituted by a continuous traction belt (10), made of soft inelastic material held at the upper end by an upper traction pulley (5) where the shaft of this traction pulley (5) is linked to a small electric motor (7) and at its lower part by a lower pulley (6) and that between both pulleys (5) and (6) keeps the traction belt taut and where attached to the outer face of the continuous traction belt (10) there is a plane with a series of rolling elements (9), and in its intermediate part there is a banknote passage sensor (8) and where in the lower part of the receiving container (2) there is a circular output crown (12) of adjustable diameter by means of a series of rolling cylinders (13) through which the rolled banknotes (14) exit, controlled by the sensor, which are deposited directly into the container (15) consisting of a cylinder of a height slightly higher than that of the rolled banknote (14) and a control code (19) located on its outer surface, provided with two upper (16) and lower (17) toroidal edges made of flexible and sliding material and of larger diameter than the diameter of the container (15), being placed downstream of the container (15) the pneumatic transport device (16) formed by a rigid tube of 1 or 2 mm. more in diameter than the toroidal edges (16) and (17) of the container (15); provided with a suction device.

2. ^{a}.- Procedure and device for the transport of banknotes and documents according to the 1st claim and **characterized in that** the procedure for the transport of banknotes and documents that the invention advocates begins when a banknote (1) is introduced into the receiving container (2) through the flat wall (3) thereof and which can be introduced vertically with the smaller base downwards or horizontally with the larger base downwards and where the input sensor (4) detects the arrival of the banknote (1) and starts the motor (7) that activates the movement of the conveyor belt (3). The inlet sensor (4) detects the arrival of the banknote (1) and starts the motor (7) which activates the movement of the continuous conveyor belt (10) so that the banknote is trapped between the continuous conveyor belt (10) and the rolling elements (9) which force the banknote downwards against the walls of the container t he receiving container (2), which due to its truncated cone shape causes it to roll up on itself, there is a passage sensor (8) to control the passage and the speed of the banknote at half height of the receiving container (2) and the banknote (1) due to its forced passage through the inverted truncated cone shape of the receiving container (2) is rolled up on itself and the thus rolled up banknote (14) is pushed to the exit crown (12) where the pressure of the rolling cylinders (13) keeps it perfectly rolled up and where the passage sensor (11) confirms that the banknote (14) passes to the container (15), where, depending on the number of banknotes stored there, it unrolls towards the walls of the said container, leaving a free inner circle for the next banknote until it is physically impossible to insert another banknote in the free inner circle and where the container (15) filled with banknotes, or with the marked quantity of banknotes is introduced into the flexible tube of the pneumatic transport conveyor (16) where the container (15) by means of the toroidal edges (16) and (17) is perfectly fitted so that the device, by suction, transfers it to the preset destination.

3. ^{a}.- Procedure and device for the transport of tickets and documents according to the previous claims and characterized because the traction element of the tickets towards the smaller end of the cone trunk consists of a train of soft rollers that receive the motor movement (7), and face the corresponding rolling elements that mentioned in the first claim do so against the conveyor belt mentioned in said claim.

4. ^{a}.- Procedure and device for the transport of banknotes and documents according to the previous claims and **characterized in that** the container (15) can be transported by any other means without ruling out direct manual means.

5. ^{a}.- Procedure and device for the transport of banknotes and documents according to the previous claims and **characterized in that** the code of the receiving container (19) is constituted by an element capable of being read automatically as a bar code, QR code, NFC or similar so that its content can be associated to the transaction carried out by the device that made the delivery.

6. ^{a}.- Procedure and device for the transport of banknotes and documents according to the previous claims and **characterized in that** the container (15) has a contactless chip capable of receiving from the device claimed, the device from which it comes and detailed information of the banknotes it contains, including currency, face amount and serial number.
